# EUROPEAN PATENT APPLICATION

(11) **EP 1 843 597 A1**
(43) Date of publication of application: **10.10.2007**
(21) Application number: 05703387.0
(22) Date of filing: 07.01.2005
(51) Int. Cl.: H04N 7/32

(54) **COMPRESSION/ENCODING DEVICE, DECOMPRESSION/DECODING DEVICE**

(71) Applicant: Fujitsu Ltd., Kawasaki-shi, Kanagawa 211-8588 (JP)
(72) Inventor: KAZUI, Kimihiko, c/o FUJITSU LIMITED, Kawasaki-shi, Kanagawa 2118588 (JP); YAMADA, Kohji, c/o FUJITSU LIMITED, Kawasaki-shi, Kanagawa 211888 (JP); ITOH, Takashi, c/o FUJITSU LIMITED, Kawasaki-shi, Kanagawa 2118588 (JP)
(74) Representative: HOFFMANN EITLE
(86) International application number: PCT/JP2005/000122
(87) International publication number: WO 2006/072992

(57) **Abstract**

There are provided a device and a method capable of improving the prediction efficiency and encoding efficiency by selecting an optimal frame used for prediction. There are provided a device and a method for compressing/encoding a frame imaged by a plurality of cameras including a standard camera in which a frame imaged by itself is compressed/encoded by a motion prediction using only the frame imaged by itself and a reference camera in which a frame imaged by itself is compressed/encoded by a motion prediction using the frame imaged by itself and the motion prediction using the frame imaged by another camera. When compressing/encoding the frame imaged by the reference camera, a frame to be used for motion prediction is decided according to the motion of an object in the imaged frame before the frame to be processed is imaged.

## Description

### BACKGROUND OF THE INVENTION

### 1. Field of the Invention

The present invention relates to a technology effective in being applied to a device and a method of coding and decoding an image captured at multi-points of view.

### 2. Description of the Related Art

Over the recent years, a technology of utilizing a dynamic image (moving picture) captured simultaneously at multi-points of view has been focused. What has been impossible to a conventional stereo-camera system is made possible by utilizing this type of dynamic image. For example, a user is enabled to watch a camera dynamic image at the multi-points of view without using a stereoscopic display. To be specific, a scene of a concert is imaged simultaneously at the multi-points of view, whereby the user is enabled to watch a situation of the concert not from a single viewpoint but from arbitrary viewpoints such as in a crosswise direction and a rear direction.

By the way, generally, a data size of the dynamic image (moving picture) is extremely large. Therefore, it is disadvantageous in terms of a transmission speed and a cost to accumulate media data and transmit the data via a network without compressing the dynamic image data. Hence, such technologies have been developed that the dynamic image is compression-coded by a reversible or irreversible method. These technologies are exemplified such as MPEG-1, MPEG-2 and MPEG-4 standardized by Moving Picture Experts Group (MPEG).

The number of dynamic images, however, increases with a rise in the number of multi-points of view at which to capture the images simultaneously (a rise in the number of cameras). Therefore, a total data size of the dynamic images captured simultaneously at the multi-points of view rises as compared with the data size of the dynamic images captured by use of the single camera. Hence, a demanded technology is a technology of efficiently compression-coding the data of dynamic images captured simultaneously at multi-points of view.

A technology of improving prediction efficiency by use of correlativity between the dynamic images captured at the multi-points of view is proposed to cope with such a problem. In this type of technology, the coding efficiency is improved as the prediction efficiency is improved. The correlativity between the dynamic images captured at the respective viewpoints implies that an object and a background projected on a camera at a certain viewpoint are also partly projected on a camera at another viewpoint. For example, when a frame on a camera *m* is compared with a frame captured at the same time on a camera *n* and if the two cameras capture the image in near positions and in near directions, there might be a case where the same obj ect and the same background are imaged. Therefore, the frames captured at the same time by the different cameras are deemed as the frames captured by the same camera, whereby the predictive coding employing the motion vector can be performed. For instance, the coding efficiency can be made higher in the case of motion-prediction-coding the frame of the camera n by employing further the frame of another camera (the camera m) than in the case of motion-prediction-coding the frame by use of only the frame captured by the same camera (the camera n) as done so far. In this case, the motion vector is equivalent to a parallax between the two cameras. This type of technology is exemplified by Patent documents 1 - 7.
Patent document 1: Japanese Patent Application Laid-Open Publication No.2001-186516
Patent document 2: Japanese Unexamined Patent Publication No.2002-523943
Patent document 3: Japanese Patent Application Laid-Open Publication No.2002-300607
Patent document 4: Japanese Patent Publication No.3426668
Patent document 5: Japanese Patent Application Laid-Open Publication No.06-98312
Patent document 6: Japanese Patent Application Laid-Open Publication No.10-191394
Patent document 7: Japanese Patent Application Laid-Open Publication No.2000-23918

### SUMMARY OF THE INVENTION

### [Problems to be solved by the Invention]

An optimal base camera is required to be set for improving efficiency of parallax prediction. The base camera represents a camera that captures the frames used for the prediction between the cameras. Further, cameras excluding the base camera are called reference cameras. The prior art had no further contrivance but to set the base camera on the basis of only layout information of the cameras at respective viewpoints, and none of effective setting standards were proposed. Therefore, the improvement of the coding efficiency was not sufficiently actualized.

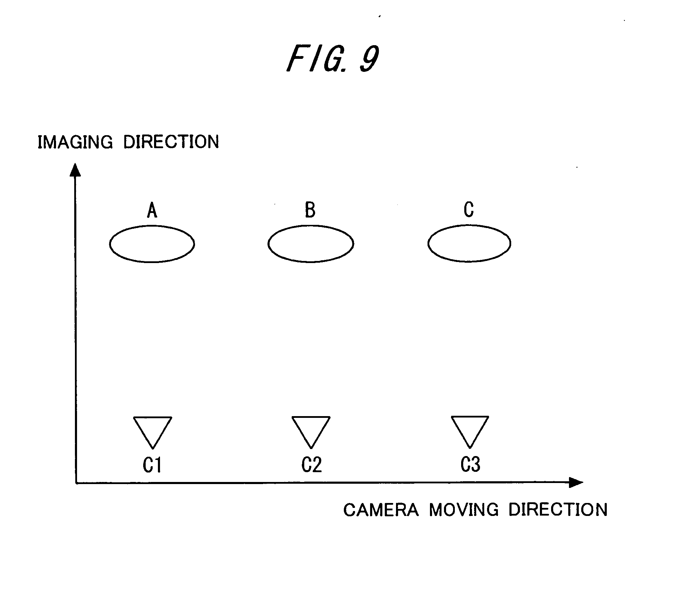

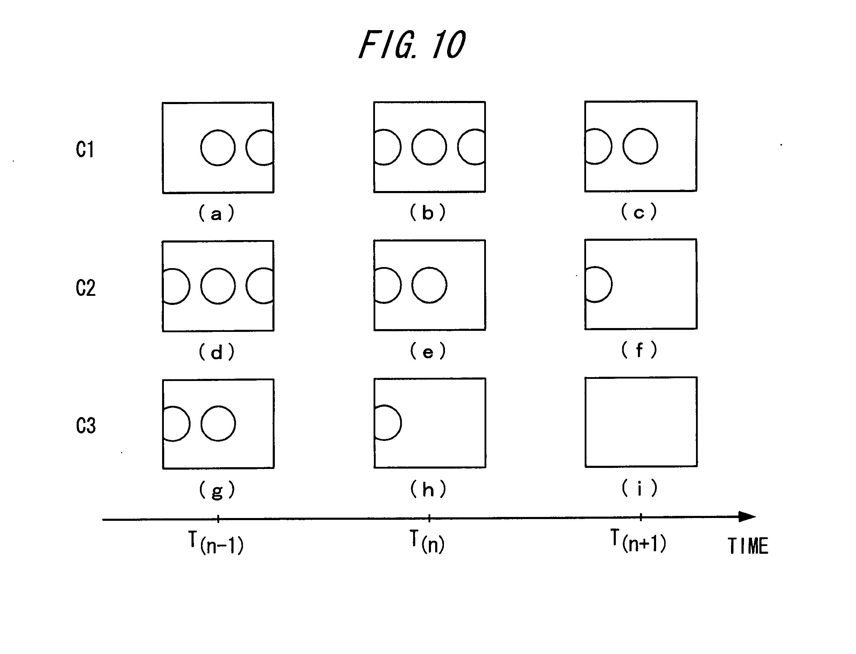

FIGS. 9 and 10 are diagrams showing problems inherent in the prior arts. The problems of the prior arts will be explained with reference to FIGS. 9 and 10. In FIG. 9, three pieces of triangles represent cameras C1, C2, C3. Further, in FIG. 9, three pieces of ellipses arranged in a camera moving direction represent objects. Moreover, each of the cameras C1, C2, C3 captures the image in an imaging direction while moving in the right direction. FIG. 10 is a diagram showing examples of frames (a) - (i) captured by the cameras C1, C2, C3 at timings T(n-1), T(n), T(n+1).

Examined is a case of predicting the frame (b) at the timing T (n) of the camera C1 only from the frame (a) at the timing T (n-1) of the same camera C1. In this case, an object C at the right end is not imaged in the frame (a) used for the prediction. Hence, the prediction efficiency decreases. On the other hand, the object C is imaged in the frame (e) of the camera C2 at the timing T(n). Therefore, if predicting the frame (b) by use of this frame (e), the prediction efficiency is improved.

Examined further is a case of performing the parallax prediction of the frame (e) at the timing T(n) of the camera C2 by use of the frame (b) at the timing T (n) of the camera C1. In this case, a right portion of the object C imaged in the frame (e) is not imaged in the frame (b), resulting in no improvement of the prediction efficiency. Thus, in the case of parallax-predicting the frame (b) from the frame (e), unlike the prediction efficiency being improved, the prediction efficiency is not improved even when parallax-predicting the frame (e) from the frame (b).

Thus, it is required that the optimal frame used for the prediction be selected corresponding to a state of the frame captured by the camera.

Such being the case, it is an object of the present invention, which solves these problems, to provide a device and a method capable of improving the prediction efficiency and the coding efficiency by selecting the optimal frame used for the prediction.

### [Means for solving the problems]

The present invention adopts the following configurations in order to solve the problems. According to a first mode of the present invention, a compression-coding device compression-codes frames captured by a plurality of cameras including a base camera in which the frames captured by the base camera itself are compression-coded based on motion prediction using only the frames captured by the base camera itself and a reference camera in which frames captured by the reference camera itself are compression-coded based on motion prediction using the frames captured by the reference camera itself and based on the motion prediction using frames captured by another camera. The compression-coding device comprises determining means, compression-coding means, predictive information generating means and synthesizing means.

The determining means determines, when compression-coding the frames captured by the reference camera, the frames of another camera that are used for the motion prediction on the basis of a motion of an object in the frames captured before capturing a processing target frame.

The compression-coding means compression-codes the frames captured by the reference camera on the basis of the motion prediction using the frames of another camera that are determined by the determining means and other frames captured by the reference camera. Further, the compression-coding means compression-codes the frames captured by the base camera on the basis of intra-frame prediction or the motion prediction using only the other frames captured by the base camera. In other words, the compression-coding means compression-codes the respective frames captured by the base camera in the same way as the conventional method of making the motion prediction by use of only the frames captured by the same camera.

The motion predictive information generating means generating predictive information containing information showing whether each of the frames is the frame captured by the base camera or the frame captured by the reference camera, and containing information for associating the frames captured by the reference camera with the other frames used for the motion prediction.

The synthesizing means generating one set of dynamic image data containing the plurality of post-coding frames captured by the base camera, the plurality of post-coding frames captured by the reference camera and the motion predictive information.

According to the firstmode of the present invention having such a configuration, the determining means determines, when compression-coding the frames captured by the reference camera, the frames used for the motion prediction on the basis of the motion of the object in the frames captured previously. Then, the frames captured by the reference camera are compression-coded based on the motion prediction using the frames determined by the determining means. Therefore, the optimal frame employed for the motion prediction is determined based on the motion of the object in the past frames, thereby scheming to improve the prediction efficiency and the coding efficiency.

Further, the determining means according to the first mode of the present invention may be configured to determine the frames of another camera that are used for the motion prediction by determining the motion of the object according to a direction of a motion vector acquired on the occasion of the motion prediction implemented in the frames captured before capturing the processing target frames.

Still further, the determining means according to the first mode of the present invention may be configured to determine, as the frames used for the motion prediction, the frames captured by another camera installed in a direction opposite to the direction of the motion vector acquired on the occasion of the motion prediction implemented in the frames captured before capturing the processing target frame with respect to the reference camera capturing the processing target frame. With this configuration, the motion prediction can be conducted by employing the frame exhibiting higher correlativity with the processing target frame. Hence, the prediction efficiency and the coding efficiency can be improved.

Moreover, according to the first mode of the present invention, the compression-coding device may be configured to further comprise base camera determining means determining at a predetermined cycle which of the plurality of cameras should be set as the base camera. With this configuration, the base camera can be precisely selected, and the optimal frame used for the motion prediction is determined, thereby scheming to improve the prediction efficiency and the coding efficiency.

The base camera determining means according to the first mode of the present invention may be configured to determine the base camera on the basis of the motion of the object in the frames captured before the processing target frame is captured.

The base camera determining means according to the first mode of the present invention may be configured to determine the base camera by determining the motion of the obj ect according to the direction of the motion vector acquired on the occasion of the motion prediction implemented in the frames captured before the processing target frame is captured.

Moreover, the motion predictive information generating means according to the first mode of the present invention may be configured to get the motion predictive information to further contain information of time when the frames captured by the reference camera are compression-coded without implementing the motion prediction using the frames captured by another camera.

According to a second mode of the present invention, a decompression-decoding device for decompression-decoding dynamic image data generated by a compression-coding device according to the first mode of the present invention, comprises determining means and decompression-decoding means.

The determining means extracts motion predictive information from the dynamic image data and determines whether or not each frame is the frame captured by any one of the base camera and the reference camera. Then, the decompression-decoding means decompression-decodes the frame determined by the determining means to be the frame captured by the base camera with the motion prediction based on only other frames captured by the same camera, and decompression-codes the frame determined by the determining means to be the frame captured by the reference camera with the motion prediction based on other frames captured by the same camera and based on the frames captured by another camera.

The first mode and the second mode may be actualized by executing a program with an information processing device. Namely, the present invention can be specified as a program for making the information processing device execute processes executed by the respective means in the first mode and the second mode, or specified as a recording medium recorded with the program. Further, the present invention may also be specified as a method by which the information process ing device executes the processes executed by the respective means.

### [Effects of the Invention]

According to the present invention, the optimal frame used for the motion prediction can be determined, and the prediction efficiency and the coding efficiency can be improved.

### BRIEF DESCRIPTION OF THE DRAWINGS

FIG. 1 is a diagram showing a prediction coding method for respective frames captured by a base camera, and the prediction coding method for the respective frames captured by a reference camera.
FIG. 2 is a diagram showing an example of a structure of dynamic image data.
FIG. 3 is a diagram showing an example of functional blocks of a compression-coding device.
FIG. 4 is a flowchart showing processing examples of a base camera determining process and a reference destination determining process.
FIG. 5 is a diagram showing an example of how the cameras are arranged.
FIG. 6 is a table showing whether each camera becomes the base camera or not and showing, in the case of the reference camera, which base camera a reference destination frame corresponds to.
FIG. 7 is a diagram showing an example of functional blocks of a decompression-decoding device.
FIG. 8 is a flowchart showing a processing example of a decoding camera determining process.
FIG. 9 is a diagram illustrating a problem of the prior art.
FIG. 10 is a diagram illustrating a problem of the prior art.

### [Description of the Reference Numerals]

- 1: compression-coding device
- 101: input frame buffer
- 102: subtracter
- 103: DCT quantization unit
- 104: IDCT inverse quantization unit
- 105: adder
- 106: frame buffer
- 107: motion/parallax vector correcting unit
- 108: variable length coding unit
- 109: header attaching unit
- 110: control unit
- 2: decompression-decoding device
- 201: header analyzing unit
- 202: coded dynamic image buffer
- 203: variable length decoding unit
- 204: IDCT inverse quantization unit
- 205: adder
- 206: display dynamic image buffer
- 207: frame buffer
- 208: motion/parallax vector correcting unit
- 209: control unit

### DETAILED DESCRIPTION OF THE INVENTION

### [Principle]

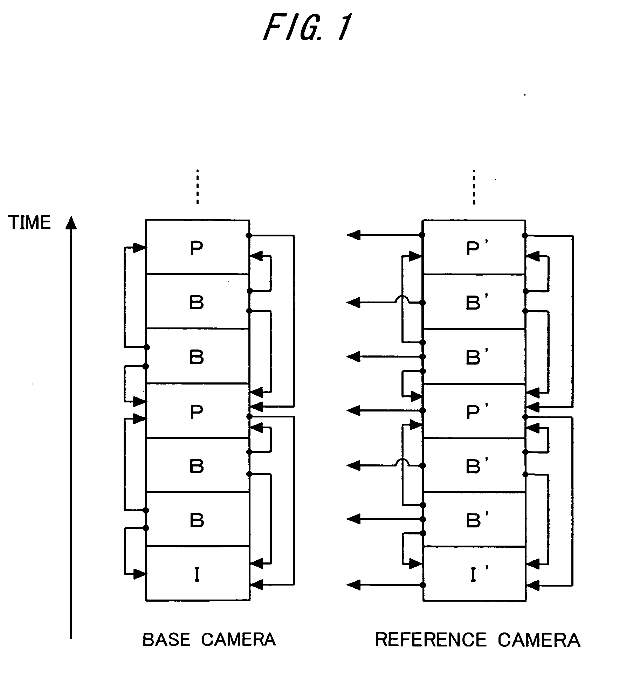

To start with, a principle of a predictive coding method according to the present invention will be described. FIG. 1 is a diagram showing the predictive coding method for respective frames captured by abase camera, and the predictive coding method for respective frames captured by a reference camera. In FIG. 1, the frames disposed at roots of arrowhead lines are subjected to predictive-coding in a way that refers to the frames disposed in positions indicated by the arrowheads.

An I-frame represents a frame undergoing Intraframe coding. The I-frame is coded without referring to none of other frames. A P-frame represents a frame a time anterior Predictive coding frame. The P-frame is the frame captured by the same camera and undergoes the predictive coding by referring to the I-frame positioned just anterior in time thereto or another P-frame. The predictive coding conducted by referring to other frames captured by the same camera will hereinafter be called [motion predictive coding]. A B-frame represents a time Bidirectional predictive coding frame. The B-frame is the frame captured by the same camera and is subjected to the predictive coding by referring to the I-frame or the P-frame positioned just anterior in time thereto and referring to the I-frame or the P-frame positioned just posterior in time thereto. Concepts of the I-frame, the P-frame and the B-frame are the same as defined by MPEG-1, MPEG-2 and MPEG-4.

An I'-frame is predictively coded by referring to only the I-frame captured at the same time by the base camera. Thus, the predictive coding performed by referring to the frames captured by another camera will hereinafter be referred to as [parallax predictive coding]. A P'-frame undergoes the predictive coding by referring to the P-frame captured at the same time by the base camera and the I'-frame captured by the same camera and positioned just anterior in time thereto or other P'-frames. A B'-frame is subjected to the predictive coding by referring to the B-frame captured at the same time by the base camera, the I'-frame or the P'-frame captured by the same camera and positioned just anterior in time thereto, and the I'-frame or the P'-frame captured by the same camera and positioned just posterior in time thereto.

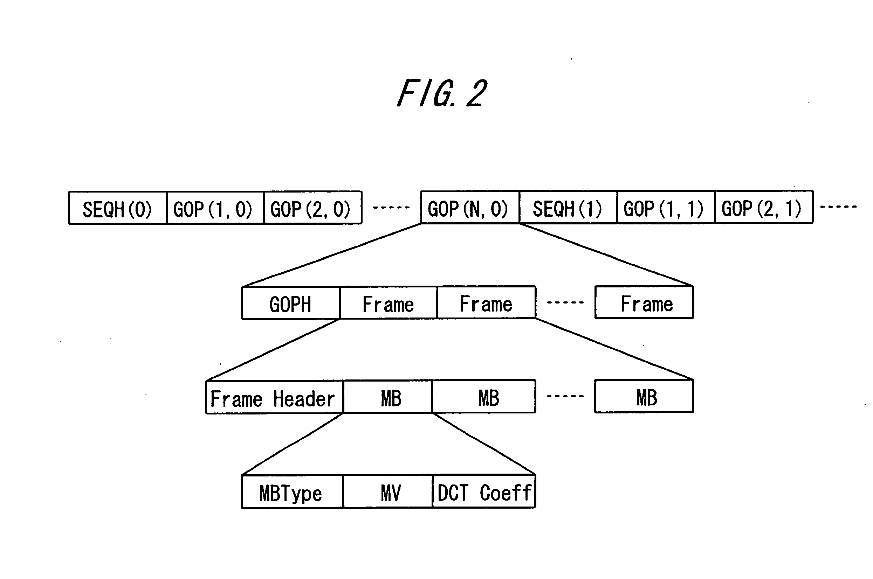

A structure of the dynamic image data generated by the predictive coding according to the present invention will be described. FIG. 2 is a diagram showing an example of the structure of the dynamic image data. The dynamic image data contains SEQH and GOP. The SEQH is inserted on an all-camera basis of the GOP (Group Of Pictures). SEQH(n) represents that the subsequent GOP is an n-th GOP. The SEQH contains a total number of cameras, a parallax prediction type of each camera (i.e., the camera capturing each frame is any one of the base camera and the reference camera) and an identifier that identifies a reference target camera in the respective reference cameras. The GOP is data about the frames that are arranged along a time-base and organized into a group. "GOP(m, n)" represents the n-th GOP of a camera "m".

One GOP contains GOPH (GOP Header) and a plurality of Frames. The GOPH is defined as header information of the GOP. The GOPH contains an identifier that identifies the camera capturing the frame and time information (a relative value of a frame number from the head of the GOP) of a period during which the parallax prediction is not conducted. The Frame is data of the coded frame.

One Frame contains a Frame Header and a plurality of MBs (Macro Blocks). The Frame Header is header information of the frame. The Frame Header contains frame prediction types (I, P, B, I', P', B'). The MB represents macro block information.

Each MB contains MBType, MV and DCTCoeff. The MBType contains prediction types (Intra, Inter, Bi-Direction) and a quantization coefficient. The prediction type further contains an identifier of the frame that is referred to by unidirectional prediction (Inter) andbidirectionalprediction (Bi-Direction). The prediction type contains one identifier in the case of the unidirectional prediction and two identifiers in the case of the bidirectional prediction. The MV is vector information. The vector information will hereinafter be described in a way of being categorized into a motion vector and a parallax vector in distinction. The motion vector represents vector information between the frames captured by the same camera, and the parallax vector stands for vector information between the frames captured by the different cameras. The DCTCoeff is quantized DCT (Discrete Cosine Transform) coefficient information of a prediction error.

Given next is an explanation of a compression-coding device 1 that generates the dynamic image data by compression-coding the dynamic images captured by the respective cameras and a decompression-decoding device 2 that decodes the dynamic image data generated by the compression-coding device 1.

### [Compression-Coding Device]

The explanation begins with an example of a configuration of the compression-coding device 1. The compression-coding device 1 includes, as hardware components, a CPU (Central Processing Unit), a main storage device (Random Access Memory: RAM) and an auxiliary storage device, which are connected to each other via a bus. The auxiliary storage device is constructed by employing a nonvolatile memory. The nonvolatile memory connoted herein indicates a so-called ROM (Read-Only Memory) (including an EPROM (Erasable Programmable Read-Only Memory), an EEPROM (Electrically Erasable Programmable Read-Only Memory), mask ROM, etc), an FRAM (Ferroelectric RAM), a hard disk and so on.

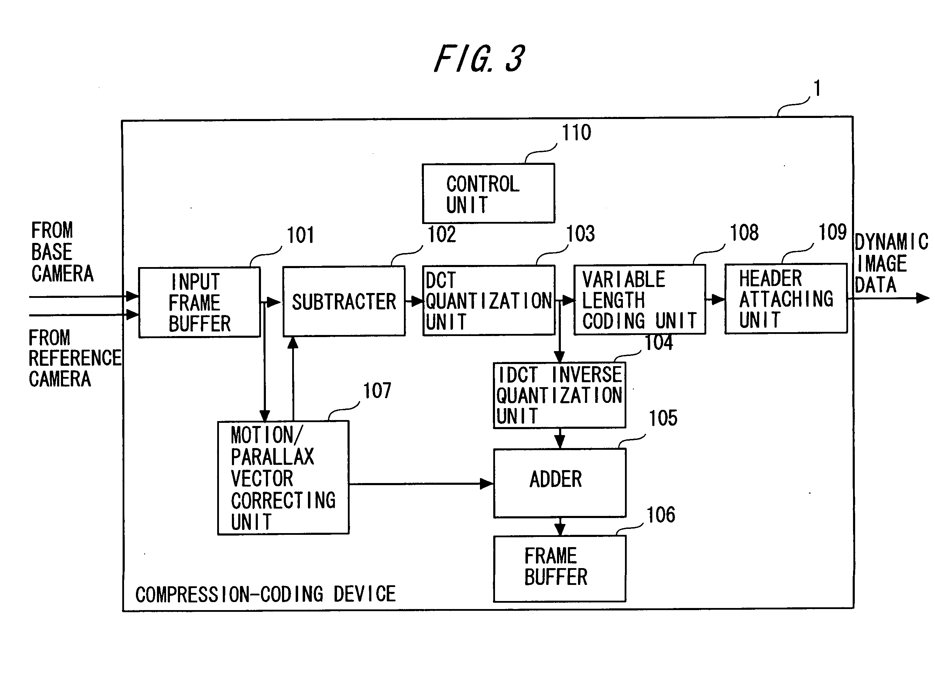

FIG. 3 is a diagram showing an example of functional blocks of the compression-coding device 1. The compression-coding device 1 functions, when a variety of programs (OS, applications, etc) stored in the auxiliary storage device are loaded into the main storage device and are executed by the CPU, as a device including an input frame buffer 101, a subtracter 102, a DCT quantization unit 103, an IDCT (Inverse DCT) inverse quantization unit 104, an adder 105, a frame buffer 106, a motion/parallax vector correcting unit 107, a variable length coding unit 108, a header attaching unit 109 and a control unit 110. The DCT quantization unit 103, the IDCT inverse quantization unit 104, the motion/parallax vector correcting unit 107, the variable length coding unit 108, the header attaching unit 109 and the control unit 110 are actualized by executing the programs with the CPU. Further, the DCT quantization unit 103, the IDCT inverse quantization unit 104, the motion/parallax vector correcting unit 107, the variable length coding unit 108, the header attaching unit 109 and the control unit 110 may also be configured as dedicated chips. Next, the respective functional units included in the compression-coding device 1 will be described.

### <Input Frame Buffer>

The input frame buffer 101 implements buffering on the dynamic image inputted to the compression-coding device 1. The dynamic image captured by the base camera and the dynamic image captured by the reference camera are inputted to the compression-coding device 1. Accordingly, the input frame buffer 101 implements buffering on the dynamic image captured by the base camera and on the dynamic image captured by the reference camera. The input frame buffer 101 outputs, according to an instruction given from the control unit 110, the frame data on a coding process basis of each camera. The "coding process basis" may embrace a 1-frame basis and also a plural-frame basis such as 1 GOP (Group of Pictures). The frame output by the input frame buffer 101, which is, i.e., the compression-coding process target frame, will hereinafter be called an input frame.

### <Subtracter>

The subtracter 102 calculates a difference between the input frame and the predictive information based onmotion compensation and parallax compensation, and outputs a result of this calculation as prediction difference information.

### <DCT Quantization Unit>

The DCT quantization unit 103 performs a DCT () Discrete cosine Transform) operation and a quantizing operation. The DCT quantization unit 103 implements the DCT operation about predictive difference information calculated by the subtracter 102 on a block basis, quantizes a DCT coefficient and outputs a quantized DCT coefficient as a result of this quantization.

### <IDCT Inverse Quantization Unit>

The IDCT inverse quantization unit 104 conducts an IDCT (Inverse Discrete Cosine Transform) operation (which will hereinafter be termed also an [inverse DCT operation]) and an inverse quantizing operation. The IDCT inverse quantization unit 104 acquires a result of the inverse DCT operation by performing the inverse quantization of the quantized DCT coefficient and the inverse DCT operation.

### <Adder>

The adder 105 generates a locally decoded dynamic image by adding up the result of the inverse DCT operation and a result of the prediction based on the motion compensation and the parallax compensation.

### <Frame Buffer>

The frame buffer 106 accumulates the locally decoded dynamic images. Further, the frame buffer 106 outputs a designated frame of a designated camera dynamic image according to the instruction given from the control unit 110. The frames output by the frame buffer 106, i.e., the frame used for the motion prediction and the parallax prediction will hereinafter be called prediction source frames.

### <Motion/Parallax Vector Compensation Unit>

The motion/parallax vector correcting unit 107 conducts block-matching-based prediction by use of the input frame and the prediction source frame in accordance with the instruction given from the control unit 110. The motion/parallax vector correcting unit 107 outputs the motion vector information and the parallax vector information to the variable length coding unit 108. Further, the motion/parallax vector correcting unit 107 outputs the predictive information to the subtracter 102. The motion vector information, the parallax vector information and the predictive information are used for minimizing the prediction error. Moreover, the motion/parallax vector correcting unit 107 outputs the motion vector information as a whole of the frames to the control unit 110. The motion vector information connotes, e.g., an average and dispersion of the motion vector information in all of the blocks.

### <Variable Length Coding Unit>

The variable length coding unit 108 generates the data of the compression-coded frames by variable-length-coding the result of the quantization. Further, the variable length coding unit 108 transfers the motion vector information used for the motion compensation and the parallax vector information employed for the parallax compensation to the header attaching unit 109.

### <Header Attaching Unit>

The header attaching unit 109 generates the dynamic image data by attaching items of information such as a camera number, a camera type (the base camera or the reference camera) and other cameras to be referred to on a frame basis or a plural-frame basis after being compression-coded.

### <Control Unit>

The control unit 110 controls the coding of the dynamic image captured by each of the cameras, determines the base camera (a base camera determining process) and also determines the frame that is referred to for the predictive coding of the frame captured by the reference camera (a reference destination determining process). Further, the control unit 110 establishes connections enabling the instructions to be given to the respective functional units. Moreover, parameters (layout information about the individual cameras) of the respective cameras are inputted to the control unit 110 from outside. The layout information may be organized by absolute positions of the respective cameras and may also be relative positions thereof. The base camera determining process and the reference destination determining process will hereinafter be described.

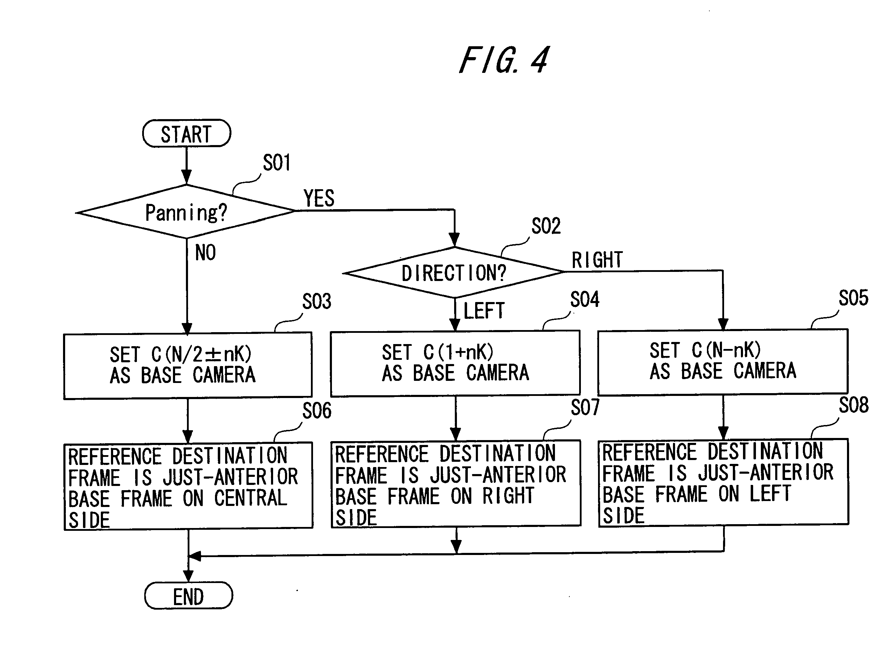

FIG. 4 is a flowchart showing an operational example of the control unit 110 in the base camera determining process and the reference destination determining process. The operational example of the control unit 110 will be explained with reference to FIG. 4. Note that the following processes are executed on a tuple-of-GOPs basis. Namely, the processes in FIG. 4 are executed on the basis of plural GOPs aggregated by one SEQH.

To start with, the control unit 110 determines whether or not panning occurs in the last frame of the just-anterior GOP (S01). The control unit 110 determines, based on the motion vector information (e.g., the average and the dispersion of the motion vector information in all of the blocks) in the last frame of the just-anterior GOP, whether the panning occurs or not. In other words, the occurrence of the panning is determined based on the motion within the captured image (picture) of an object in the last frame. In this case, the control unit 110 determines whether or not an average value of the crosswise motion vectors is equal to or larger than a threshold value, and determines whether or not the dispersion thereof is equal to or larger than a threshold value. If these two conditions are satisfied, the control unit 110 determines that the panning occurs. Whereas if even one of these two conditions is not satisfied, the control unit 110 determines that the panning does not occur.

When determining that none of the panning occurs (S01-No), the control unit 110 calculates "C (N/2 ± nK) " and sets the camera corresponding to a result of this calculation as the base camera (S03). Note that C (m) stands for an identifier that identifies an m-th camera, and an assumption is that the numerals are assigned to the plurality of cameras arranged in one direction in this arranging sequence. Further, "N" represents a total number of the cameras. Moreover, "n" indicates an integer that is equal to or greater than "0". Still further, a value of "K" is a positive value that is properly set by a designer, corresponding to an interval between the cameras and a distance between the camera and the object. In this case, the camera existing at the center of a train of cameras and the cameras existing at an equal interval (K) in the right-and-left directions, are set as the base cameras.

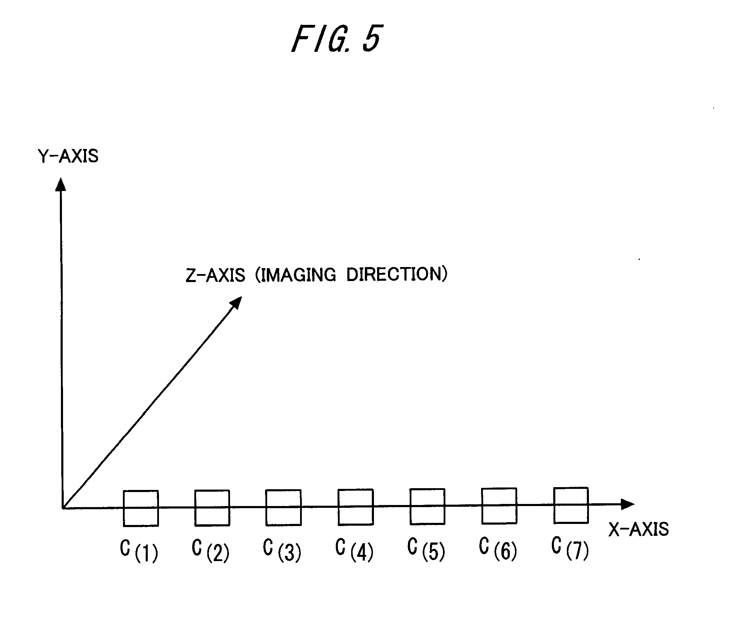

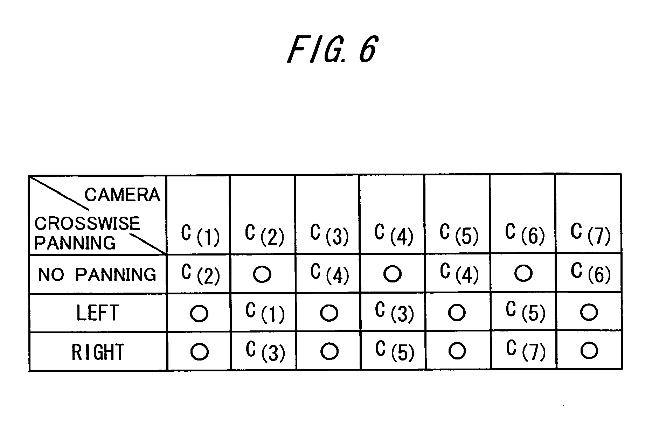

Then, in the frames included in the processing target GOP, reference destination frame for prediction-coding the frame captured by the reference camera is determined. In this case, the control unit 110 determines the nearest base frame on the central side with respect to each frame as the reference destination frame (S06). FIG. 5 is a diagram showing an example of the arrangement of the cameras. Further, FIG. 6 is a table showing whether each camera becomes the base camera or not and showing, in the case of the reference camera, which base camera the reference destination frame corresponds to. FIG. 5 shows that seven pieces of cameras C(1)- C(7) are arranged in the numerical sequence along the X-axis. FIG. 5 also illustrates that the respective cameras are arranged at equal or arbitrary intervals in a direction vertical to an imaging direction (a Z-axis direction). Further, in FIG. 6, a value of K is set to "2". FIG. 6 also shows that the mark "O" designates the base camera, and C (m) represents that the frame captured by this camera is the reference destination frame. When determining that the panning does not occur, as a result of the process in S03, the cameras C(2), C(4) and C(6) are set as the base cameras. Then, the base camera C(2) is the reference destination to the camera C(1), the base camera C (4) is the reference destination to C(3) and C (5), and the base camera C (6) is the reference destination to C(7).

Next, a case of determining that the panning occurs (SO1-Yes) will be explained. In this case, the control unit 110 determines which direction the panning occurs in (S02). This direction can be determined from the motion vector information used when determining the occurrence of the panning. Namely, the direction in which the panning occurs can be determined from this vector direction. The control unit 110, when determining that the panning occurs in the left direction (S02-left), C(1+nK) is set as the base camera (S04). Then, the control unit 110 determines the reference destination frame as the nearest base frame on the right side to each frame captured by the reference camera (S07). In other words, the control unit 110 sets the reference destination frame, to each frame captured by the reference camera, as the frame corresponding to the nearest base camera installed in a direction opposite to the panning-occurred direction.

While on the other hand, the control unit 110, when determining that the panning occurs in the right direction (S02-right), sets C (N-nK) as the base camera (S05). Then, the control unit 110 determines the reference destination frame to each frame captured by the reference camera as the nearest base camera on the left side (S08).

### [Decompression-Decoding Device]

Next, an example of a configuration of the decompression-decoding device 2 will be described. The decompression-decoding device 2 is configured by including, as hardware components, a CPU (Central Processing Unit), a main storage device (Random Access Memory: RAM) and an auxiliary storage device, which are connected to each other via a bus. The auxiliary storage device is constructed by employing a nonvolatile memory. The nonvolatile memory connoted herein indicates a so-called ROM (Read-Only Memory) (including an EPROM (Erasable Programmable Read-Only Memory), an EEPROM (Electrically Erasable Programmable Read-Only Memory), a mask ROM, etc), an FRAM (Ferroelectric RAM), a hard disk and so on.

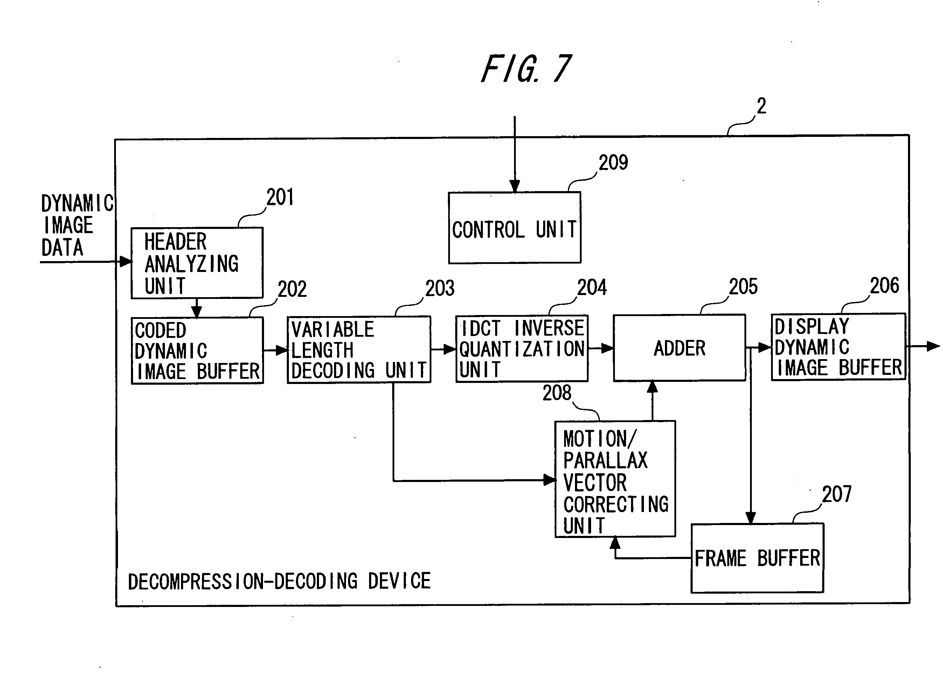

FIG. 7 is a diagram showing an example of functional blocks of the decompression-decoding device 2. The decompression-decoding device 2 functions, when a variety of programs (OS, applications, etc) stored in the auxiliary storage device are loaded into the main storage device and are executed by the CPU, as a device including a header analyzing unit 201, a coded dynamic image buffer 202, a variable length decoding unit 203, an IDCT inverse quantization unit 204, an adder 205, a display dynamic image buffer 206, a frame buffer 207, a motion/parallax vector correcting unit 208 and a control unit 209. The header analyzing unit 201, the variable length decoding unit 203, the IDCT inverse quantization unit 204, the motion/parallax vector correcting unit 208 and the control unit 209 are actualized by executing the programs with the CPU. Further, the header analyzing unit 201. th variable length decoding unit 203, the IDCT inverse quantization unit 204, the motion/parallax vector correcting unit 208 and the control unit 209 may also be configured as dedicated chips. Next, the respective functional units included in the decompression-decoding device 2 will be described.

### <Header Analyzing Unit>

The header analyzing unit 201 extracts the header information from the inputted dynamic image data (the dynamic image data generated by the compression-coding device 1). Items of header information are, to be specific, an identifier and a type of the camera (the base camera or the reference camera) that captures each frame, and an identifier of the camera capturing the reference destination frame. Further, the header analyzing unit 201 receives the identifier of the camera capturing the should-be-decoded frame from the control unit 209. Then, the header analyzing unit 201 determines based on this identifier whether each of the inputted frames should be decoded or not, and transfers only the frame determined as the should-be-decoded frame to the coded dynamic image buffer 202. Specifically, the header analyzing unit 201 determines the GOP corresponding to a should-decode-target camera in the GOPs containing the frames captured by the respective cameras (a decoding target camera determining process). The execution of this process enables omission of the decoding process about unnecessary frames, and the processing can be speeded up. Simultaneously, a should-do-buffering data size can be also reduced, and, for example, the display dynamic image buffer 206 and the frame buffer 207 can be downsized. Moreover, the header analyzing unit 201 notifies the control unit 209 of the identifier of the frame transferred to the coded dynamic image buffer 202.

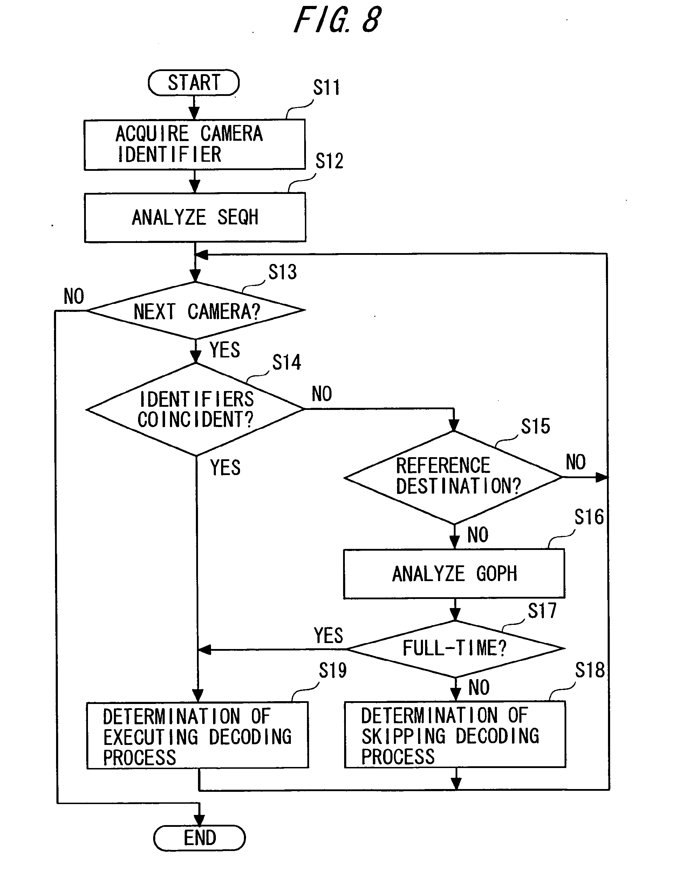

The decoding target camera determining process will hereinafter be described. Note that an assumption of the following description is that the image captured by the reference camera will have been compression-coded by use of only the frame captured by the base camera as the reference destination frame. The assumption is not, however, necessarily thus limited. FIG. 8 is a flowchart showing an operational example of the header analyzing unit 201 in the decoding target camera determining process. The process shown in this flowchart is executed each time the SEQH is detected. To begin with, the header analyzing unit 201 acquires the camera identifier from the control unit 209 (S11). Next, the header analyzing unit 201 extracts the SEQH from the dynamic image data to be inputted and analyzes the SEQH (S12). Through this analysis, the header analyzing unit 201 acquires an error prediction type of each camera and the identifier of the reference destination camera.

Next, the header analyzing unit 201 searches for the GOPH (GOP Header). At this time, if the next SEQH is detected, i.e., if there is no frame captured by the next camera, this process is terminated (S13-No). Whereas if the GOPH is detected (S13-Yes), the header analyzing unit 201 analyzes this GOPH, thereby acquiring the camera identifier. Then, the header analyzing unit 201 determines whether or not the identifier contained in the GOPH is coincident with the identifier transferred from the control unit 209. If coincident with each other (S14-Yes), the header analyzing unit 201 determines that the decoding of each of the frames contained in this GOP should be executed (S19). Then, the processes from S13 onward are again executed.

While on the other hand, the header analyzing unit 201, if the identifiers are not coincident with each other (S14-No), determines whether or not the camera is a camera corresponding to the reference destination of the camera specified by the identifier transferred from the control unit 209. If not the reference destination (S15-No), the processes from S13 onward are executed. Whereas if determined to be the reference destination (S15-Yes), the header analyzing unit 201 analyzes the GOPH, thus analyzing a period of time during which the parallax prediction is not performed (S16). Then, if the parallax prediction is performed in full-time (S17-Yes), it is determined that the decoding of each of the frames contained in this GOP should be executed (S19). Whereas if the parallax prediction is not conducted for some period of time (S17-No), the header analyzing unit 201 decides the frame undergoing the parallax prediction, and determines that only this frame should be decoded (S18). Then, the processes from S13 onward are again executed.

### <Coded Dynamic Image Buffer>

The coded dynamic image buffer 202 buffers the respective frames determined as the should-be-decoded frames by the header analyzing unit 201. The coded dynamic image buffer 202 outputs the frames on a decoding process basis according to an instruction given from the control unit 209. The "decoding process basis" may be a 1-frame basis and may also be a plural-frame basis as in the case of the GOP.

### <Variable Length Decoding Unit>

The variable length decoding unit 203 variable-length-decodes the variable-length-coded quantized DCT coefficient, and transfers a decoded result to the IDCT inverse quantization unit 204. Further, the variable length decoding unit 203 variable-length-decodes also the motion vector information and the parallax vector information, and transfers a decoded result to the motion/parallax vector correcting unit 208.

### <IDCT Inverse Quantization unit>

The IDCT inverse quantization unit 204 performs the IDCT operation and the inverse quantizing operation. The IDCT inverse quantization unit 204 inversely quantizes the quantized DCT coefficient and performs the inverse DCT operation, thereby acquiring a result of the inverse DCT operation.

### <Adder>

The adder 205 generates the decoded dynamic image by adding up the result of the inverse DCT operation and the result of the prediction based on the motion compensation and the parallax compensation.

### <Display Dynamic Image Buffer>

The display dynamic image buffer 206 buffers the data of the decoded dynamic image generated by the adder 205. At this time, the display dynamic image buffer 206 buffers the data of the decoded dynamic image corresponding to the camera designated to display from outside. Then, the display dynamic image buffer 206 sequentially outputs the data undergoing the buffering.

### <Frame Buffer>

The frame buffer 207 buffers the data of the decoded dynamic image in the same way as by the display dynamic image buffer 206. Further, the frame buffer 207 accumulates, irrespective of the designation given from outside, the frames captured by other cameras, which are needed for decoding the processing target frame.

### <Motion/Parallax Vector Correcting Unit>

The motion/parallax vector correcting unit 208 reads, based on the instruction given from the control unit 209, the frames employed for the motion prediction and the parallax prediction, which are required for decoding the processing target frame, from the frame buffer 207. Then, the motion/parallax vector correcting unit 208 acquires the motion vector information/parallax vector information from the variable length decoding unit 203. Then, the motion/parallax vector correcting unit 208 acquires and transfers a predicted result to the adder 205.

### <Control Unit>

The control unit 209 conducts the decoding control about the dynamic image data to be inputted. Further, the control unit 209 establishes connections enabling the instructions tobe given to the respective functional units. Moreover, the control unit 209 receives an input of the identifier specifying the camera capturing the dynamic image that should be output to outside from the display dynamic image buffer 206. The identifier may be the singular or the plural. Then, the control unit 209 transfers the inputted identifier to the header analyzing unit 201.

### [Modified Example]

The respective frames (the I'-frame, the P'-frame and the B'-frame) captured by the reference camera may be prediction-coded by referring to the frames captured by another reference camera without being limited to the frames captured at the same time by the base camera, and may also be prediction-codedby referring to the frames captured at different points of time by the base camera and another reference camera.

Further, the cameras are not necessarily arranged along the straight line but may be arranged in any form such as a wavy line, a circle, a cross and a square.

### Industrial Applicability

The present invention can acquire the effects when applied to the device that codes and decodes the images captured at the multi-points of view.

## Claims

1. A compression-coding device for compression-coding frames captured by a plurality of cameras including a base camera in which the frames captured by the base camera itself are compression-coded based on motion prediction using only the frames captured by the base camera itself and a reference camera in which frames captured by the reference camera itself are compression-coded based on motion prediction using the frames captured by the reference camera itself and based on the motion prediction using frames captured by another camera, said compression-coding device comprising:
determining unit determining, when compression-coding the frames captured by the reference camera, the frames of another camera that are used for the motion prediction on the basis of a motion of an object in the frames captured before capturing a processing target frame;
compression-coding unit compression-coding the frames captured by the reference camera on the basis of the motion prediction using the frames determined by said determining unit and other frames captured by the reference camera, and
compression-coding the frames captured by the base camera on the basis of intra-frame prediction or the motion prediction using only the other frames captured by the base camera;
motion predictive information generating unit generating predictive information containing information showing whether each of the frames is the frame captured by the base camera or the frame captured by the reference camera, and containing information for associating the frames captured by the reference camera with the other frames used for the motion prediction; and
synthesizing unit generating one set of dynamic image data containing the plurality of post-coding frames captured by the base camera, the plurality of post-coding frames captured by
the reference camera and the motion predictive information.

2. A compression-coding device according to claim 1, wherein said determining unit determines the frames of another camera that are used for the motion prediction by determining the motion of the object according to a direction of a motion vector acquired on the occasion of the motion prediction implemented in the frames captured before capturing the processing target frames.

3. A compression-coding device according to claim 2, wherein said determining unit determines, as the frames used for the motion prediction, the frames captured by another camera installed in a direction opposite to the direction of the motion vector acquired on the occasion of the motion prediction implemented in the frames captured before capturing the processing target frame with respect to the reference camera capturing the processing target frame.

4. A compression-coding device according to claim 1, further comprising base camera determining unit determining at a predetermined cycle which of the plurality of cameras should be set as the base camera.

5. A compression-coding device according to claim 4, wherein said base camera determining unit determines the base camera on the basis of the motion of the object in the frames captured before the processing target frame is captured.

6. A compression-coding device according to claim 5, wherein said base camera determining unit determines the base camera by determining the motion of the obj ect according to the direction of the motion vector acquired on the occasion of the motion prediction implemented in the frames captured before the processing target frame is captured.

7. A compression-coding device according to claim 1, wherein said motion predictive information generating unit gets the motion predictive information to further contain information of time when the frames captured by the reference camera are compression-coded without implementing the motion prediction using the frames captured by another camera.

8. A decompression-decoding device for decompression-decoding dynamic image data generated by a compression-coding device for compression-coding frames captured by a plurality of cameras including a base camera in which the frames captured by the base camera itself are compression-coded based on motion prediction using only the frames captured by the base camera itself and a reference camera in which frames captured by the reference camera itself are compression-coded based on motion prediction using the frames captured by the reference camera itself and based on the motion prediction using frames captured by another camera, said compression-coding device comprising: determining unit determining, when compression-coding the frames captured by the reference camera, the frames of another camera that are used for the motion prediction on the basis of a motion of an object in the frames captured before capturing a processing target frame; compression-coding unit compression-coding the frames captured by the reference camera on the basis of the motion prediction using the frames determined by said determining unit and other frames captured by the reference camera, and compression-coding the frames captured by the base camera on the basis of intra-frame prediction or the motion prediction using only the other frames captured by the base camera; motion predictive information generating unit generating predictive information containing information showing whether each of the frames is the frame captured by the base camera or the frame captured by the reference camera, and containing information for associating the frames captured by the reference camera with the other frames used for the motion prediction; and synthesizing unit generating one set of dynamic image data containing the plurality of post-coding frames captured by the base camera, the plurality of post-coding frames captured by the reference camera and the motion predictive information,
said decompression-decoding device comprising:
determining unit extracting motion predictive information from the dynamic image data and determining which of the base camera and the reference camera each frame is the frame captured by; and
decompression-decoding unit decompression-decoding the frame determined by said determining unit to be the frame captured by the base camera with the motion prediction based on only other frames captured by the same camera, and decompression-coding the frame determined by said determining unit to be the frame captured by the reference camera with the motion prediction based on other frames captured by the same camera and based on the frames captured by another camera.

9. A compression-coding method ofcompression-coding frames captured by a plurality of cameras including a base camera in which the frames captured by the base camera itself are compression-coded based on motion prediction using only the frames captured by the base camera itself and a reference camera in which frames captured by the reference camera itself are compression-coded based on motion prediction using the frames captured by the reference camera itself and based on the motion prediction using frames captured by another camera, said compression-coding method comprising:
a step in which an information processing device determines, when compression-coding the frames captured by the reference camera, the frames used for the motion prediction on the basis of a motion of an object in the frames captured before capturing a processing target frame;
a step in which said information processing device compression-codes the frames captured by the reference camera on the basis of the motion prediction using the frames determined in said determining step and other frames captured by the reference camera, and compression-codes the frames captured by the base camera on the basis of intra-frame prediction or the motion prediction using only the other frames captured by the base camera;
a step in which said information processing device generates predictive information containing information showing whether each of the frames is the frame captured by the base camera or the frame captured by the reference camera, and containing information for associating the frames captured by the reference camera with the other frames used for the motion prediction; and
a step in which said information processing device generates one set of dynamic image data containing the plurality of post-coding frames captured by the base camera, the plurality of post-coding frames captured by the reference camera and the motion predictive information.

10. A decompression-decoding method of decompression-decoding dynamic image data generated by a compression-coding device for compression-coding frames captured by a plurality of cameras including a base camera in which the frames captured by the base camera itself are compression-coded based on motion prediction using only the frames captured by the base camera itself and a reference camera in which frames captured by the reference camera itself are compression-coded based on motion prediction using the frames captured by the reference camera itself and based on the motion prediction using frames captured by another camera, said compression-coding device comprising: determining unit determining, when compression-coding the frames captured by the reference camera, the frames of another camera that are used for the motion prediction on the basis of a motion of an object in the frames captured before capturing a processing target frame; compression-coding unit compression-coding the frames captured by the reference camera on the basis of the motion prediction using the frames determined by said determining unit and other frames captured by the reference camera, and compression-coding the frames captured by the base camera on the basis of intra-frame prediction or the motion prediction using only the other frames captured by the base camera; motion predictive information generating unit generating predictive information containing information showing whether each of the frames is the frame captured by the base camera or the frame captured by the reference camera, and containing information for associating the frames captured by the reference camera with the other frames used for the motion prediction; and synthesizing unit generating one set of dynamic image data containing the plurality of post-coding frames captured by the base camera, the plurality of post-coding frames captured by the reference camera and the motion predictive information, said decompression-decoding method comprising:
a step in which an information processing device extracts motion predictive information from the dynamic image data and determines which of the base camera and the reference camera each frame is the frame captured by; and
a step in which said information processing device decompression-decodes the frame determined in said determining step to be the frame captured by the base camera with the motion prediction based on only other frames captured by the same camera,
and decompression-codes the frame determined in said determining step to be the frame captured by the reference camera with the motion prediction based on other frames captured by the same camera and based on the frames captured by another camera.

11. A recording medium recorded with a program for making an information processing device execute compression-coding of frames captured by a plurality of cameras including a base camera
in which the frames captured by the base camera itself are compression-coded based on motion prediction using only the frames captured by the base camera itself and a reference camera
in which frames captured by the reference camera itself are compression-coded based on motion prediction using the frames captured by the reference camera itself and based on the motion prediction using frames captured by another camera, said program making said information processing device execute:
a step of determining, when compression-coding the frames captured by the reference camera, the frames used for the motion prediction on the basis of a motion of an object in the frames captured before capturing a processing target frame;
a step of compression-coding the frames captured by the reference camera on the basis of the motion prediction using the frames determined in said determining step and other frames captured by the reference camera, and compression-coding the frames captured by the base camera on the basis of intra-frame prediction or the motion prediction using only the other frames captured by the base camera;
a step of generating predictive information containing information showing whether each of the frames is the frame captured by the base camera or the frame captured by the reference camera, and containing information for associating the frames captured by the reference camera with the other frames used for the motion prediction; and
a step of generating one set of dynamic image data containing the plurality of post-coding frames captured by the base camera, the plurality of post-coding frames captured by the reference camera and the motion predictive information.

12. A recording medium recorded with a program for making an information processing device execute decompression-decoding of dynamic image data generated by a compression-coding device for compression-coding frames captured by a plurality of cameras including a base camera in which the frames captured by the base camera itself are compression-coded based on motion prediction using only the frames captured by the base camera itself and a reference camera in which frames captured by the reference camera itself are compression-coded based on motion prediction using the frames captured by the reference camera itself and based on the motion prediction using frames captured by another camera, said compression-coding device comprising: determining unit determining, when compression-coding the frames captured by the reference camera, the frames of another camera that are used for the motion prediction on the basis of a motion of an object in the frames captured before capturing a processing target frame; compression-coding unit compression-coding the frames captured by the reference camera on the basis of the motion prediction using the frames determined by said determining unit and other frames captured by the reference camera, and compression-coding the frames captured by the base camera on the basis of intra-frame prediction or the motion prediction using only the other frames captured by the base camera; motion predictive information generating unit generating predictive information containing information showing whether each of the frames is the frame captured by the base camera or the frame captured by the reference camera, and containing information for associating the frames captured by the reference camera with the other frames used for the motion prediction; and synthesizing unit generating one set of dynamic image data containing the plurality of post-coding frames captured by the base camera, the plurality of post-coding frames captured by the reference camera and the motion predictive information,
said program making said information processing device execute:
a step of extracting motion predictive information from the dynamic image data and determines which of the base camera and
the reference camera each frame is the frame captured by; and
a step of decompression-decoding the frame determined in said determining step to be the frame captured by the base camera with the motion prediction based on only other frames captured by the same camera, and decompression-coding the frame determined in said determining step to be the frame captured by the reference camera with the motion prediction based on other frames captured by the same camera and based on the frames captured by another camera.

13. A compression-coding device for compression-coding frames captured by a plurality of cameras including a base camera in which compression-coding is performed by use of only frames captured by the base camera itself and a reference camera in which the compression-coding is performed by use of the frames captured by the reference camera itself and the frames captured by another camera, said compression-coding device comprising:
image-capturing unit each constructed of at least one of the base camera and the reference camera;
determining unit determining, when compression-coding the frames captured by the reference camera, the frames captured by the reference camera itself or another camera that are used for motion prediction based on a motion vector of an object in the frames captured anterior and posterior in time with respect to a processing target frame; and
coding unit compression-coding the frames captured by at least the reference camera with motion prediction using the frames determined by said determining unit and other frames captured by the reference camera.
